# EUROPEAN PATENT SPECIFICATION

(11) **EP 1 737 685 B1**
(45) Date of publication and mention of the grant of the patent: **17.10.2007**
(21) Application number: 05738994.2
(22) Date of filing: 08.04.2005
(51) Int. Cl.: B60C 27/16

(54) **ATTACHABLE TIRE TRACTION SYSTEM**
BEFESTIGBARES REIFENTRAKTIONSSYSTEM
SYSTEME DE BANDE DE ROULEMENT AMOVIBLE

(30) Priority: 14.04.2004 TR 200400784
(43) Date of publication of application: 03.01.2007
(73) Proprietor: Aket Otomotiv Aksesuar San. Ve Tic. Ltd. Sti., Sehitkamil 27500 Gaziantep (TR)
(72) Inventor: KOC, Ahmet Kisla Cad., Demirkapi Eyüp, 34040 Istanbul (TR)
(74) Representative: Cayli, Hülya
(86) International application number: PCT/TR2005/000017
(87) International publication number: WO 2005/100056

(56) References cited:
- EP-A- 0 519 213
- EP-A- 1 344 659
- DE-A1- 2 161 985
- GB-A- 191 210 015
- US-A- 6 092 577
- US-B1- 6 230 772

## Description

### Technical Field

This invention relates to a system which facilitates driving of the vehicles on the surfaces with snow and ice by being attached to the outer surface of the vehicle tires.

### Background Art

Various methods have been used in order to facilitate driving of vehicles on snowy and icy surfaces during winter conditions. One of these methods, namely studded snow tires, has not been widely used due to their costs. Although, studded snow tires are suitable for being used especially on icy roads, they could not be used where the snow thickness is huge. Instead, chains which wraparound the vehicle tires are preferred. As for chains, they lead to difficulties of attachment-detachment necessities upon varying road conditions. Moreover, they cause malfunctioning of some parts of the vehicles due to generation of vibrations.

In the prior art, different solutions have been made to problems mentioned above to enable vehicle tires suitable for winter conditions by covering the tires. Particularly, in patent/patent applications: DE3506649, DE3506650, DE3616372, ES2013405, FR2537060, GB1238637, GB190921111, GB2049575, polymer and metal tracks covered to the outer surface of the vehicle tires have been described. Since, there are difficulties for covering these tracks on the tires and their structures being complex, many problems occur concerning with the cost, utilization and maintenance thereof.

In patent document DE 2161985 a tire traction system with band formed tire tracks being grooved on the outer surface similar to the pattern of a vehicle tire is disclosed. This tire traction system according to the preamble of claim 1, comprises pin holes through which rigidified pins can be fitted; inner metal tracks provided with hollow connection tabs on two sides of each metal track to connect the inner metal tracks together; the rigidified pins which are passed through corresponding holes inside the metal track and the band formed grooved tracks; track locking pins. Subject matter of the invention differs from this patent document in that the rigidified pins have head portion which do not pass through the corresponding holes of the tracks, and the head portion of said rigidified pins ret on the surface of the tire when the system is attached. And also steel robe with tightening capsules on both ends and front is not disclosed in the prior art document.

In patent document EP 0519213 a mounting antiskid device for automobile tires is disclosed. This device is designed as a segmented plastic envelope. The envelope comprises thread segments provided with metal spikes and recesses, binding elements. But in this document, metal tracks located under the corresponding band formed tracks with grooves and rigidified pins to be fitted in pin holes are not disclosed.

### Object of the invention

The object of the invention is to provide a tire traction system being attached or covered on the vehicle tires, usable in all winter conditions, inexpensive, easy to attach/detach and protective for tires.

### Description of the Drawings

The system of the invention is illustrated in the appended figures, in which:
Figure 1. is a perspective view of the attachable tire traction system and its parts before mounting on the vehicle tire.
Figure 2. is a perspective view of the attachable tire traction system and its parts after mounting on the vehicle tire.
Figure 3. is a rear view of the attachable tire traction system and its parts after mounting on the vehicle tire.
Figure 4. is a front view of the attachable tire traction system and its parts after mounting on the vehicle tire.

In figures, each part is numbered individually and corresponds to the numbers given below:
A. Attachable tire traction system
B. Vehicle tire
C. Rim cover
   1. Attachable tire track
   2. Inner metal track
   3. Rigidified pin
   4. Track locking pin
   5. Front tensioner hook
   6. Rear tensioner hook
   7. Lock piece
   8. Tightening capsule
   9. Steel rope
   10. Steel rope covering
   11. Front tensioner rubber
   12. Outer surface of tire track
   13. Pin holes of tire track
   14. Tensioner loops of tire track
   15. Connection tabs of tire track
   16. Pin holes of inner metal track
   17. Connection tabs of inner metal track

The subject of the invention is a tire traction system being attached or covered on the vehicle tires, usable in all winter conditions, inexpensive, easy to attach/detach and protective for vehicle tires. The most important properties of the attachable tire traction system are being an alternative to chains which have a breaking off problem, harm to vehicle tires, front equipments such as vehicle axle, ball bearings or other equipments due to vibration or impacts, being free of rupture problems as in the case of chains, protective for vehicle tires, usable on the roads even there is no snow/ice, non-harmful to any equipment of the vehicle, operative relatively quiet comparing to chained tires. In addition, attachable tire tack system has capability to be attached /detached easily and these operations could be done without removing the tire or lifting the vehicle.

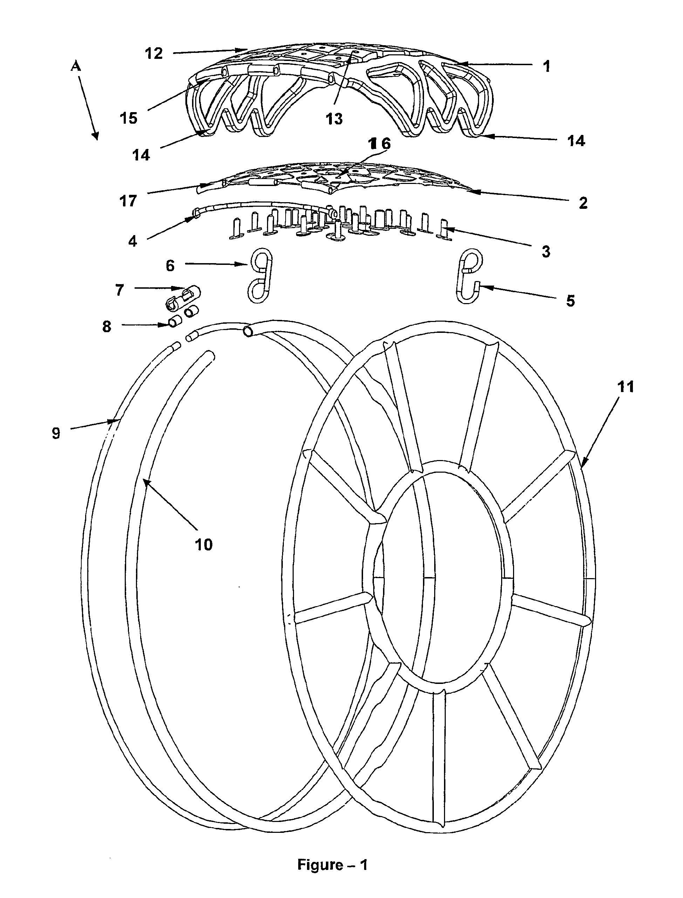

As shown in Figure 1, attachable tire traction system (A) of the invention comprises attachable tire tracks (1), inner metal tracks (2), rigidified pins (3), track locking pins (4), front tensioner hooks (5), rear tensioner hooks (6), lock piece (7), tightening capsules (8), a steel rope (9) of rear tensioner, a steel rope covering (10) of rear tensioner and a front tensioner rubber (11).

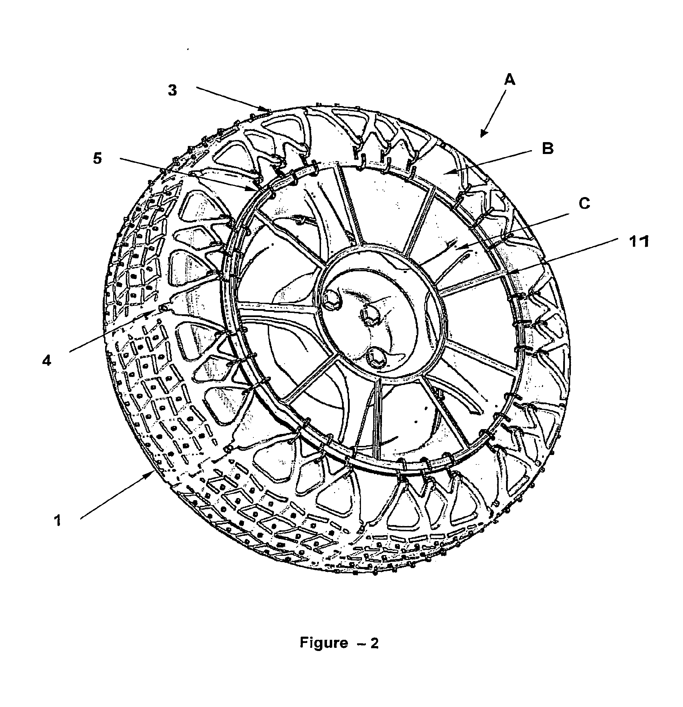

Attachable tire tracks (1) have outer surfaces (12) of tire track which is grooved and diked similar to the patterns of vehicle tires (B) (shown in Figures 2, 3 and 4), pin holes (13) of tire track through which rigidified pins (3) can be fitted, and are in the form of a band. Tensioner loops of tire track (14) are formed at the opposite ends of the band form matching to the lateral surface of the vehicle track (B) at which the front and rear tensioner hooks (5, 6) are attached. Hollow connection tabs (15) of tire track are placed at the other both ends of the band form to connect the attachable tire tracks (1) together. Attachable tire tracks (1) are preferably made of rubber material which is more elastic than that of the vehicle tire (B). Attachable tire tracks (1) are manufactured by molding in one piece. When attachable tire tracks (1) are joined together by the connection tabs (15) of tire track, resulting structure in the form of a long band is wrapped to the contact surface of the vehicle tire (B) to the ground and takes the loop form by being joined at this surface. Attachable tire tracks (1) wrapped to the vehicle tires are used as one or more, preferably 9 pieces, in the context of the invention.

Inner metal tracks (2) placed under the attachable tire tracks (1) have pin holes (16) of inner metal tracks through which the rigidified pin (3) can be fitted. Inner metal tracks (2) lay between the attachable tire tracks (1) and vehicle tire (B). Pin holes (16) of the inner metal tracks retain the rigidified pins (3) in place without being disrupted. Further, inner metal track (2) has the form of a band to be placed under the attachable tire tracks (1). Hollow connection tabs (17) of inner metal track are placed at both sides of the band form to connect the inner metal tracks (2) together. Rigidified pins (3) fitted through the pin holes (16) of the inner metal track and the pin holes (13) of the tire track hold together the attachable tire track (1) and the inner metal track (2) just beneath hereof. Consequently, the strength of the attachable tire tracks (1) reinforced with the inner metal track (2) is improved and as a result tearing is prevented. Inner metal tracks (2) are joined together by the connection tabs of the inner metal track (17). Inner metal tracks (2) are used as one or more, preferably 9 pieces, in the context of the invention.

Rigidified pins (3) have an elongated thin body capable to pass through the pin holes (16) of inner metal track and the pin holes (13) of attachable tire track and a wide surface disable to pass through the pin holes (13, 16) and resting on the vehicle tire at the lower portion. In other words, rigidified pins (3) have a head portion (wide surface) which does not pass through corresponding holes (16) of the tracks (2), and the head portion of said rigidified pins (3) rest on the surface of tire (B), when the system (A) is attached.

Track locking pins (4) are used to join the inner metal tracks (2) together by being passed through the connection tabs (17) of inner metal track and the hollow connection tabs (15) of tire track and also to join the attachable tire tracks (1) together.

Front tensioner hooks (5) are used to join front tensioner rubber (11) and attachable tire tracks (1) together. One end of the front tensioner hook is attached to the tensioner loops of tire track (14) and the other end is attached to the front tensioner rubber (11).

After the tightening capsules (8) are connected to both open ends of the steel rope (9), steel rope (9) is shielded by being placed in the steel rope covering (10). Steel rope covering (10) is made of flexible plastic material and has a tube or hose shaped structure. Steel rope covering (10) is used to protect the steel rope (9) from wear and corrosion. At the same time, steel rope covering (10) prevents wear of vehicle tire (B) due to the friction between the steel rope (9) and the vehicle tire. Thus, if the steel rope (9) is used with the absence of the steel rope covering (10), both the vehicle tire (B) is damaged and its strength is diminished in time due to corrosion and wear.

User holds two ends of steel ropes (9) to join these two ends together behind the vehicle tire to surround the axle periphery when the vehicle tire (B) is on the vehicle. In this position, these two ends of the steel rope (9) are joined together by attaching tightening capsules (8) to the lock piece (7). In this position, rear tensioner hooks (6) are used to join steel rope (9) and attachable tire tracks (1) together. One end of the rear tensioner hook (6) is attached to the tensioner loops of tire track (14) and the other end is attached to the steel rope (9).

In Figure 2, a perspective view of the attachable tire traction system (A) and its parts after mounting on the vehicle tire (B) is seen.

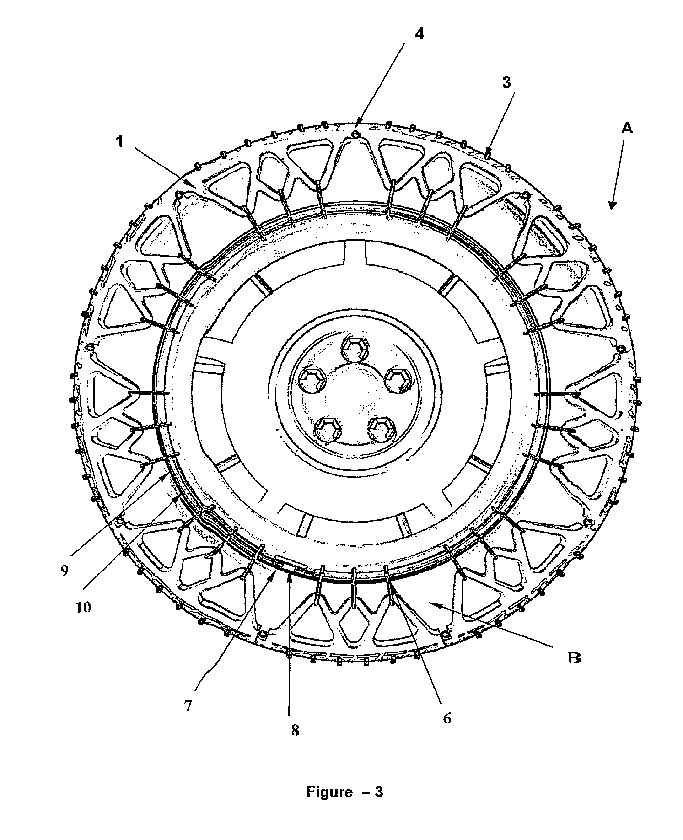

In Figure 3, a rear view of the attachable tire traction system (A) and its parts after mounting on the vehicle tire (B) is seen.

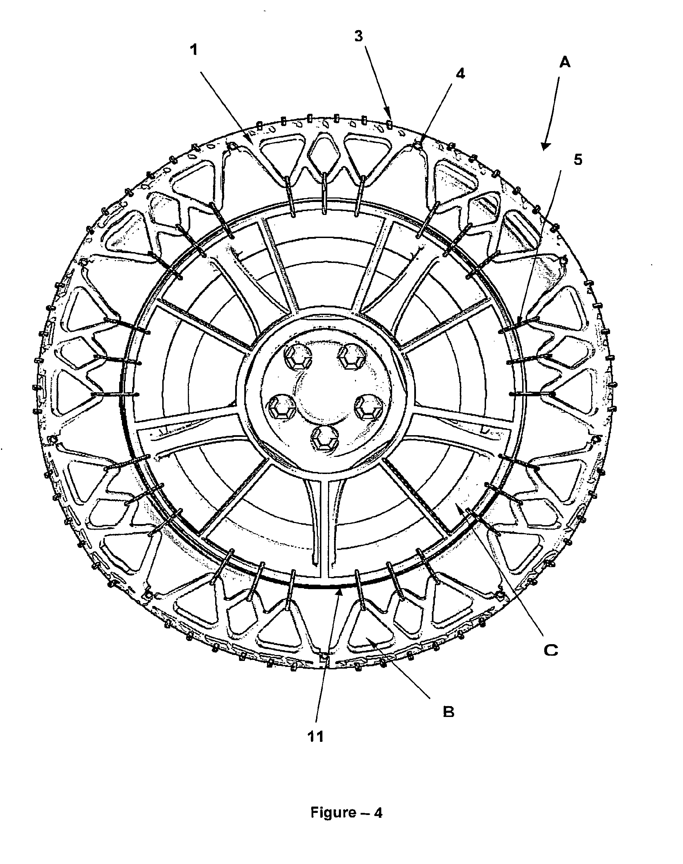

In Figure 4, a front view of the attachable tire traction (system (A) and its parts after mounting on the vehicle tire (B) is seen.

In Figures 2, 3, 4:
- Rigidified pins (3) outwardly extend under the inner metal track (2) and are passed through the pin holes (16) of inner metal track and pin holes (13) of tire track and its wide surfaces rest on the vehicle tire (B).
- Joined track structure by rigidified pins (3) constitutes the attachable tire track and inner metal track (2) so that the attachable tire track (1) is at the top and the inner metal track (2) is at the bottom,
- Attachable tire tracks (1) joined from the connection tabs (15) of tire track by the track locking pins (4) wraparound the vehicle tire (B).
- In the rear side of the vehicle tire (B), tightening capsules (8) attached to two open ends of steel rope (9) of rear tensioner in the steel rope covering (10) of rear tensioner are attached to the lock piece (7).
- Steel rope (9) is joined to tensioner loops (14) of tire track by rear tensioner hooks (6).
- In front of the vehicle tire or at the side of rim cover (C), front tensioner hooks are joined to the tensioner loops (14) of tire track by the front tensioner rubber (11).

Attachable tire traction system (A) is on the vehicle tire (B).

As an alternative to the attachable tire traction system (A) described above, the connection of the attachable tire tracks (1) and the inner metal tracks (2) could be obtained by producing the inner metal tracks (2) as embedded in the attachable tire tracks (1). In this case, the pin holes (13) of tire track and pin holes (16) of inner metal track are coaxial, connection tabs (17) of inner metal track is embedded in the connection tabs (15) of tire track and holes are coaxial. In this type of integral structure, by only attaching track locking pins (4) to connection tabs (15) of tire track, connection tabs (17) of inner metal track and hence the connection of inner metal tracks are done as well. Therefore, user does not have to make the connection of inner metal tracks (2) in the attachable tire traction system (A). Moreover, since the inner metal tracks (2) are embedded in the attachable tire tracks, the possibility of damage by the inner metal tracks (2) to the vehicle tire is avoided. In this case in Figures 2, 3, 4:
- Rigidified pins (3) outwardly extend under the attachable tire track (1) and are passed through the pin holes (16) of inner metal track and pin holes (13) of tire track and its wide surfaces rest on the vehicle tire (B).
- Attachable tire tracks (1) joined from the connection tabs (15) of tire track by the track locking pins (4) wraparound the vehicle tire (B).
- In the rear side of the vehicle tire (B), tightening capsules (8) attached to two open ends of steel rope (9) in the steel rope covering (10) are attached to the lock piece (7).
- Steel rope (9) is joined to tensioner loops (14) of tire track by rear tensioner hooks (6).
- In front of the vehicle tire or at the side of rim cover (C), front tensioner hooks (5) are joined to the tensioner loops (14) of tire track by the front tensioner rubber (11).

An alternative of attachable tire traction system (A) is on the vehicle tire (B).

## Claims

1. Attachable tire traction system (A) comprising;
band formed attachable tire tracks (1) whose outer surfaces (12) are grooved similar to the patterns of vehicle tires (B), pin holes (13) of tire track through which rigidified pins (3) can be fitted and said tracks (1) which are wrapped around the vehicle tire (B);
track locking pins (4), front tensioner hooks (5), rear tensioner hooks (6), lock piece (7), tightening capsules (8), a steel rope (9), a steel rope covering (10) and a front tensioner rubber (11);
inner metal tracks (2) provided with hollow connection tabs (17) on two sides of each metal track to connect the inner metal tracks (2) together;
rigidified pins (3) which are being passed through the pin holes (16) of inner metal track (2) and pin holes (13) of tire track;
**characterized in that** when the said system (A) is attached to the vehicle tire (B),
to improve the strength, avoid tearing, and support the attachable tire track (1), said inner metal tracks (2), which are band formed, being placed between the attachable tire tracks (1) and the vehicle tire (B);
said rigidified pins (3) have an elongated thin body being passed through the pin holes (16) of the inner metal tracks (2) and pin holes (13) of the track; said rigidified pins (3) further have a head portion which does not pass through corresponding holes (16) of the tracks (2), and the head portion of said rigidified pins (3) rest on the surface of tire (B), when the system (A) is attached;
said track locking pins (4) which are used to join the inner metal tracks (2) and the attachable tire tracks (1) by being passed through the connection tabs (17) of inner metal track and the hollow connection tabs (15) of tire track;
in the rear side of the vehicle tire (B) when the line (B) is on the vehicle, tightening capsules (8) attached to both open ends of steel rope (9), which is inside of the steel rope covering (10), being attached to the lock piece (7), and said steel rope (9) being joined to tensioner loops (14) of tire track by rear tensioner hooks (6);
in front of the vehicle tire (B) or at the side of rim cover (C), front tensioner hooks (5) being joined to the tensioner loops (14) of tire track by the front tensioner rubber (11).

2. Attachable tire traction system (A) according to claim 1, wherein tensioner loops (14) of tire track are at the opposite two ends of the said track (1) matching to the lateral surfaces of the vehicle tire (B).

3. Attachable tire traction system (A) according to claim 1, wherein hollow connection tabs (15) of tire track are at the other two ends of the said track (1)

4. Attachable tire traction system (A) according to claim 1, wherein attachable tire tracks (1) are preferably made of rubber material which is more elastic than that of the vehicle tire (B).

5. Attachable tire traction system (A) according to claim 1, wherein steel rope (9) is placed, to be protected from wear and corrosion, in the steel rope covering (10) made of flexible plastic material.

6. Attachable tire traction system (A) according to claim 1, wherein the inner metal tracks (2) are embedded in the attachable tire tracks (1).

7. Attachable tire traction system (A) according to claims 1 and 6, wherein connection tabs (17) of inner metal track are embedded in connection tabs (15) of tire track and whose pin holes are coaxial.

## Patentansprüche

1. Aufmontierbares Reifentraktionssystem (A) mit:
bandförmigen aufmontierbaren Reifenlaufflächen (1), deren Außenflächen (12) mit Vertiefungen versehen sind, die den Mustern von Fahrzeugreifen (B) ähnlich sind, wobei Bolzenöffnungen (13) in der Reifenlauffläche ausgebildet sind, durch die verstärkte Bolzen (3) eingepasst werden können, und wobei die Reifenlaufflächen (1) um den Fahrzeugreifen (B) gewickelt werden können;
Laufflächenverriegelungsbolzen (4); vorderen Spannhaken (5); hinteren Spannhaken (6); einem Verriegelungselement (7); Befestigungskapseln (8); einem Stahlseil (9); einer Stahlseilhülle (10); einem vorderen Spanngummi (11);
inneren Metallschienen (2) mit hohlen Verbindungslaschen (17) auf beiden Seiten jeder Metallschiene zum Verbinden der inneren Metallschienen (2) miteinander; und
verstärkten Bolzen (3), die durch die Bolzenlöcher (16) der inneren Metallschiene (2) und die Bolzenlöcher (13) der Reifenlauffläche geführt werden;
**dadurch gekennzeichnet, dass,** wenn das System (A) am Fahrzeugreifen (B) angeordnet ist:
die bandförmigen inneren Metallschienen (2) zum Verbessern der Festigkeit und Stabilität, zum Vermeiden einer Rissbildung und zum Halten der aufmontierbaren Reifenlauffläche (1) zwischen den aufmontierbaren Reifenlaufflächen (1) und dem Fahrzeugreifen (B) angeordnet sind;
die verstärkten Bolzen (3) einen länglichen dünnen Körper aufweisen, der durch die Bolzenöffnungen (16) der inneren Metallschienen (2) und die Bolzenöffnungen (13) der Reifenlauffläche geführt wird, wobei die verstärkten Bolzen (3) ferner einen Kopfabschnitt aufweisen, der nicht durch entsprechende Öffnungen (16) der Metallschienen (2) geführt wird, und wobei der Kopfabschnitt der verstärkten Bolzen (3) an der Oberfläche des Reifens (B) anliegt, wenn das System (A) angeordnet ist;
die Laufflächenverriegelungsbolzen (4), die zum Verbinden der inneren Metallschienen (2) und der aufmontierbaren Reifenlaufflächen (1) verwendet werden, durch die Verbindungslaschen (17) der inneren Metallschiene und die hohlen Verbindungslaschen (15) der Reifenlauffläche geführt werden;
in der Rückseite des Fahrzeugreifens (B), wenn der Reifen (B) auf dem Fahrzeug angeordnet ist, Befestigungskapseln (8), die an beiden offenen Enden des im Inneren der Stahlseilhülle (10) angeordneten Stahlseils (9) angeordnet sind, am Verriegelungselement (7) angeordnet sind, wobei das Stahlseil (9) durch hintere Spannhaken (6) mit Spannschlaufen (14) der Reifenlauffläche verbunden wird;
an der Vorderseite des Fahrzeugreifens (B) oder an der Seite der Felgenabdeckung oder eines Radzierdeckels (C) vordere Spannhaken (5) durch das vorderen Spanngummi (11) mit den Spannschlaufen (14) der Reifenlauffläche verbunden werden.

2. Aufmontierbares Reifentraktionssystem (A) nach Anspruch 1, wobei die Spannschlaufen (14) der Reifenlauffläche an den beiden gegenüberliegenden Enden der Lauffläche (1) den Seitenflächen des Fahrzeugreifens (B) angepasst sind.

3. Aufmontierbares Reifentraktionssystem (A) nach Anspruch 1, wobei die hohlen Verbindungslaschen (15) der Reifenlauffläche an den anderen beiden Enden der Reifenlauffläche (1) angeordnet sind.

4. Aufmontierbares Reifentraktionssystem (A) nach Anspruch 1, wobei die aufmontierbaren Reifenlaufflächen (1) vorzugsweise aus einem Gummimaterial hergestellt sind, das elastischer ist als dasjenige des Fahrzeugreifens (B).

5. Aufmontierbares Reifentraktionssystem (A) nach Anspruch 1, wobei das Stahlseil (9), um es vor Verschleiß und Korrosion zu schützen, in einer aus einem flexiblen Kunststoffmaterial hergestellten Stahlseilhülle (10) angeordnet ist.

6. Aufmontierbares Reifentraktionssystem (A) nach Anspruch 1, wobei die inneren Metallschienen (2) in den aufmontierbaren Reifenlaufflächen (1) eingebettet sind.

7. Aufmontierbares Reifentraktionssystem (A) nach Anspruch 1 und 6, wobei die Verbindungslaschen (17) der inneren Metallschiene in Verbindungslaschen (15) der Reifenlauffläche eingebettet sind, deren Bolzenöffnungen koaxial ausgebildet sind.

## Revendications

1. Système de traction de pneu amovible (A) comprenant:
une bande constituée de bandes de roulement amovibles (1) dont les surfaces extérieures (12) sont rainurées de façon identique à la sculpture des pneus du véhicule (B), des orifices à tiges (13) de la bande de roulement du pneu au travers desquels peuvent être fixées des tiges rigidifiées (3) et les dites bandes de roulement (1) qui entourent le pneu du véhicule (B);
des tiges de verrouillage des carcasses (4), des crochets de tendeur avant (5), des crochets de tendeur arrière (6), une pièce de verrouillage (7), des couronnes de serrage (8), un câble d'acier (9), une gaine de câble d'acier (10) et un caoutchouc de tendeur avant (11);
des carcasses métalliques intérieures (4) pourvues de taquets de fixation creux (17) sur les deux côtés de chaque carcasse métallique pour relier les carcasses métalliques intérieures;
des tiges rigidifiées (3) que l'on passe à travers les orifices à tiges (16) de la carcasse métallique intérieure (2) et des orifices à tiges (13) de la bande de roulement;
**caractérisé en ce que** le dit système (A) est relié au pneu du véhicule (B),
pour améliorer la solidité, éviter le déchirement et soutenir la bande de roulement amovible (1), les dites carcasses métalliques intérieures (2), qui sont en forme de bande, étant placées entre la bande de roulement amovible (1) et le pneu du véhicule (B);
les dites tiges rigidifiées (3) ont un corps fin et étire passant à travers des orifices à tiges (16) des carcasses métalliques intérieures (2) et des orifices à tiges de la bande de roulement; les dites tiges rigidifiées (3) en outre ont une partie de leur tête qui ne passe pas à travers les orifices correspondants (16) des carcasses (2), et la partie de la tête des dites tiges rigidifiées (3) reste à la surface du pneu (B), lorsque le système (A) est relié;
les dites tiges de verrouillage des carcasses (4) qui sont utilisées pour relier les carcasses métalliques intérieures (2) à la bande de roulement amovible (1) en passant à travers les taquets de fixation (17) de la carcasse métallique intérieure et les taquets de fixation creux (15) de la bande de roulement;
sur le côté arrière du pneu du véhicule (B) lorsque le pneu (B) est monté sur le véhicule, des couronnes de serrage (8) reliées aux deux extrémités ouvertes du câble d'acier (9), qui est à l'intérieur de la gaine du câble d'acier(10), qui est relié à la pièce de verrouillage (7) et le dit câble d'acier (9) étant relié aux anneaux de tension (14) de la bande de roulement par des crochets de tendeur arrière (6);
devant le pneu du véhicule (B) ou bien sur le côté de la jante de couverture (C), les crochets de tendeur avant (5) étant reliés aux anneaux de tension (14) de la bande de roulement par le caoutchouc de tendeur avant (11).

2. Système de traction de pneu amovible (A) selon la revendication 1, où les anneaux de tension (14) de la bande de roulement sont aux deux extrémités opposées de la dite bande de roulement (1) coïncidant avec les surfaces latérales du pneu du véhicule (B).

3. Système de traction de pneu amovible (A) selon la revendication 1, où les taquets de fixation creux (15) de la bande de roulement sont situés aux deux autres extrémités de la dite bande de roulement (1).

4. Système de traction de pneu amovible (A) selon la revendication 1, où les bandes de roulement amovibles (1) sont fabriquées de préférence avec un caoutchouc plus élastique que celui avec lequel est fabriqué le pneu du véhicule (B).

5. Système de traction de pneu amovible (A) selon la revendication 1, où le câble d'acier est placé, pour être protégé de l'usure et de la corrosion, dans la gaine de câble d'acier (10) fabriquée avec un matériel élastique flexible.

6. Système de traction de pneu amovible (A) selon la revendication 1, où les carcasses métalliques intérieures (2) sont encastrées aux bandes de roulement amovibles (1).

7. Système de traction de pneu amovible (A) selon les revendications 1 et 6, ou les taquets de fixation (17) de la carcasse métallique intérieure sont encastrés aux taquets de fixation (15) de la bande de roulement dont les orifices sont coaxiaux.
